# FASCICULE DE BREVET EUROPEEN

(11) **EP 0 929 903 B1**
(45) Date de publication et mention de la délivrance du brevet: **14.11.2001**
(21) Numéro de dépôt: 97943015.4
(22) Date de dépôt: 29.09.1997
(51) Int. Cl.: G21C 3/334

(54) **SQUELETTE D'ASSEMBLAGE COMBUSTIBLE NUCLEAIRE A TUBES GUIDES ET PROCEDE DE FABRICATION D'UN TEL SQUELETTE**
SKELETT EINES KERNBRENNSTABBÜNDELS MIT FÜHRUNGSROHREN UND VERFAHREN ZUR FERTIGUNG DERARTIGEN SKELETTS
ASSEMBLY FRAME FOR NUCLEAR FUEL WITH GUIDE TUBES AND METHOD FOR MANUFACTURING SAME

(30) Priorité: 30.09.1996 FR 9611870
(43) Date de publication de la demande: 21.07.1999
(73) Titulaire: FRAMATOME, 92400 Courbevoie (FR); COMPAGNIE GENERALE DES MATIERES NUCLEAIRES, 78140 Velizy Villacoublay (FR)
(72) Inventeur: BROSSET, Alain, F-69270 Fontaines-Saint-Martin (FR)
(74) Mandataire: Fort, Jacques
(86) Numéro de dépôt international: FR9701708
(87) Numéro de publication internationale: WO9814958

(56) Documents cités:
- EP-A- 0 201 859
- EP-A- 0 268 817
- EP-A- 0 578 848
- US-A- 4 492 668
- US-A- 4 738 820

## Description

La présente invention concerne les squelettes d'assemblage combustible nucléaire ayant un embout supérieur et un embout inférieur reliés par des tubes guides destinés à recevoir des crayons de grappe de commande et auxquels sont généralement fixées des grilles de maintien latéral et/ou de support de crayons de combustible.

En général, la partie inférieure des tubes guides est constituée de façon à freiner hydrauliquement la descente des crayons lorsqu'ils approchent de leur position basse. Pour cela, on constitue la partie inférieure du tube guide de façon qu'elle étrangle l'écoulement du liquide réfrigérant chassé par les crayons. Il existe diverses solutions. L'une d'elles consiste à réduire le diamètre intérieur du tube guide dans sa partie inférieure. L'invention concerne plus particulièrement un autre type, dans lequel la partie inférieure des'tubes guides contient une cartouche tubulaire munie d'un bouchon inférieur, en appui contre un bouchon terminal inférieur du tube guide qui, lui, est en appui contre l'embout inférieur. La cartouche réduit la section d'échappement de réfrigérant autour du crayon de grappe. Un passage supplémentaire étranglé est généralement prévu dans l'axe d'une vis de fixation des bouchons à l'embout inférieur.

La présente invention vise notamment à fournir un squelette dont les ensembles tube guide-bouchon sont fixés de façon sûre à l'embout.

Pour cela, l'invention propose notamment un squelette dont les faces en regard de chaque bouchon de tube guide et du bouchon de cartouche correspondant présentent des saillies axiales coopérant entre elles pour provoquer un blocage relatif en rotation des deux bouchons.

Ainsi, on supprime tout risque de rotation relatif entre les bouchons. Le couple de serrage de la vis dans les bouchons de cartouche est transféré au bouchon du tube guide et, par lui, à l'embout. Le blocage relatif en rotation est obtenu par une liaison qu'on peut qualifier "de formes" ou positive, par opposition à une liaison par frottement.

Les saillies axiales peuvent avoir des formes très variées. Elles peuvent constituer un crabotage. L'un des bouchons peut être muni d'un tenon diamétral pénétrant dans une mortaise de l'autre bouchon. Les saillies peuvent être constituées par des dentures complémentaires. Chaque saillie peut avoir un développement angulaire de 180° et avoir une forme en demi-lune.

L'invention est applicable quelle que soit la longueur de la cartouche. Il est possible de l'utiliser aussi bien dans des assemblages où l'extrémité supérieure de la cartouche se trouve entre la grille basse et la grille immédiatement au-dessus (cas d'un réacteur de 900 MWe) que dans celui où la cartouche se termine au-dessus des deux grilles basses (cas des réacteurs de 1300 MWe).

La présente invention propose également un procédé de montage d'un squelette d'assemblage, suivant lequel :
- on constitue des blocs constitués chacun d'une cartouche et d'un bouchon terminal inférieur ayant un trou taraudé, fixés l'un à l'autre (par exemple par sertissage dans une gorge circonférentielle du bouchon),
- on constitue un sous-ensemble de squelette comprenant des tubes guides munis chacun d'un bouchon inférieur percé d'un trou axial lisse et assemblés par des grilles soudées sur les tubes,
- on introduit à frottement doux les blocs dans les tubes guides respectifs en les orientant pour provoquer l'engagement relatif de saillies en regard des bouchons de cartouche et de tube guide, et
- on fixe un embout inférieur d'assemblage aux tubes guides par des vis dont la tête s'appuie sur l'embout et dont la tige traverse le tube guide du bouchon inférieur de tube guide et se visse dans le trou taraudé du bouchon de cartouche.

Ce procédé permet d'éviter d'avoir à fixer de façon énergique la cartouche au tube guide par soudage, ce qui serait difficile à réaliser étant donné la quasi impossibilité de fixer, par soudage par points, trois éléments concentriques l'un sur l'autre, à savoir les manchons de la grille à solidariser des tubes guides, les tubes guides et les cartouches.

Les caractéristiques ci-dessus ainsi que d'autres apparaîtront mieux à la lecture de la description qui suit de modes particuliers de réalisation de l'invention, donnés à titre d'exemples non limitatifs. La description se réfère aux dessins qui l'accompagnent, dans lesquels :
- la figure 1 est un schéma à grande échelle, montrant la disposition relative des embouts, des deux grilles basses et d'un tube guide muni d'une cartouche, conformément à un mode de réalisation de l'invention ;
- la figure 2 est une vue en perspective, avec une coupe partielle, destinée à montrer la disposition relative de la partie inférieure d'un tube guide et d'une cartouche, cette dernière étant montrée à un emplacement avant engagement relatif des deux bouchons ;
- la figure 3 est une vue en coupe de la partie inférieure du tube guide de la figure 1 ;
- la figure 4 est une vue en élévation montrant, dans une direction perpendiculaire au plan de la figure 3, les bouchons avant assemblage ;
- les figures 5A et 5B montrent un couple de bouchons suivant une variante de réalisation, respectivement en élévation et en coupe suivant la ligne B-B de la figure 5A ;
- la figure 6, similaire à la figure 5A, montre une variante.

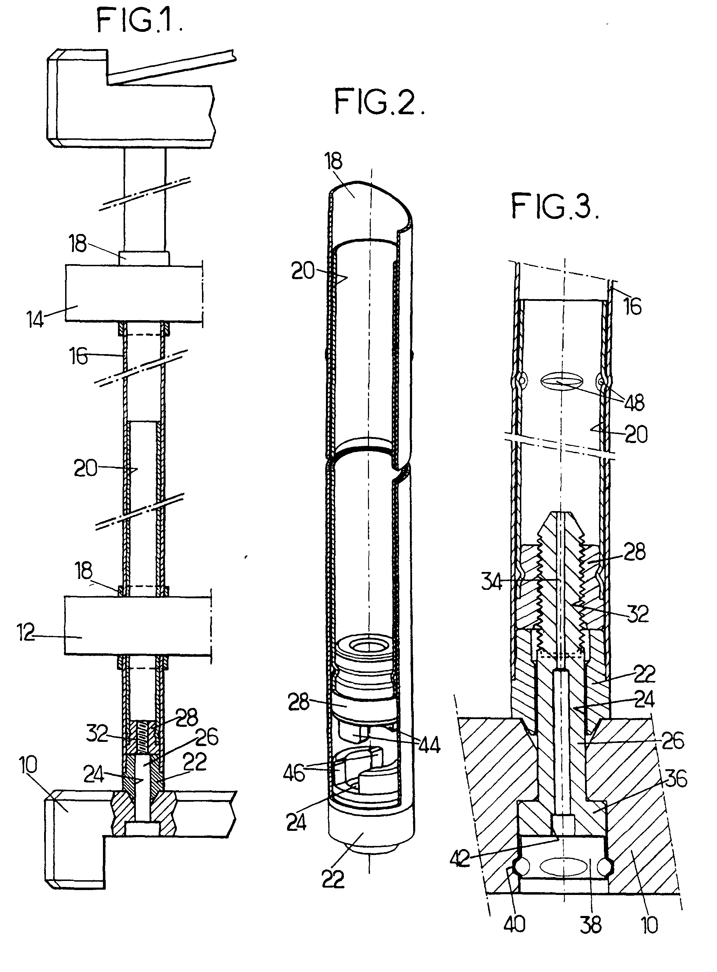

La figure 1 montre la disposition relative de l'embout inférieur 10, des deux grilles basses 12 et 14 et d'un tube guide 16 d'un assemblage combustible nucléaire d'un genre couramment utilisé à l'heure actuelle. Les grilles comportent des manchons 18 soudés par points sur les tubes guides 16. La partie inférieure de chaque tube guide 16 contient une cartouche 20 destinée à réduire la section droite du passage dans lequel s'engage un crayon de grappe de commande lorsque ce crayon approche du bas de sa course. Les cartouches peuvent avoir également pour fonction de renforcer les tubes guides à leur partie inférieure. Sur la figure 1, les moyens servant à fixer le tube guide 16 et la cartouche 20 sur l'embout inférieur 10 ne sont pas représentés, pour plus de clarté.

Dans le mode de réalisation de l'invention montré en figures 2 à 4, le tube guide 16 est fermé par un bouchon inférieur 22 soudé au tube et présentant une saillie tronconique qui vient s'engager dans un évidement de forme correspondante de l'embout inférieur 10, de façon à centrer le tube guide. Dans le bouchon 22 de tube guide est ménagé un trou axial lisse 24 (représenté en figure 3) destiné à livrer passage à la tige d'une vis 26 de fixation à l'embout inférieur 10.

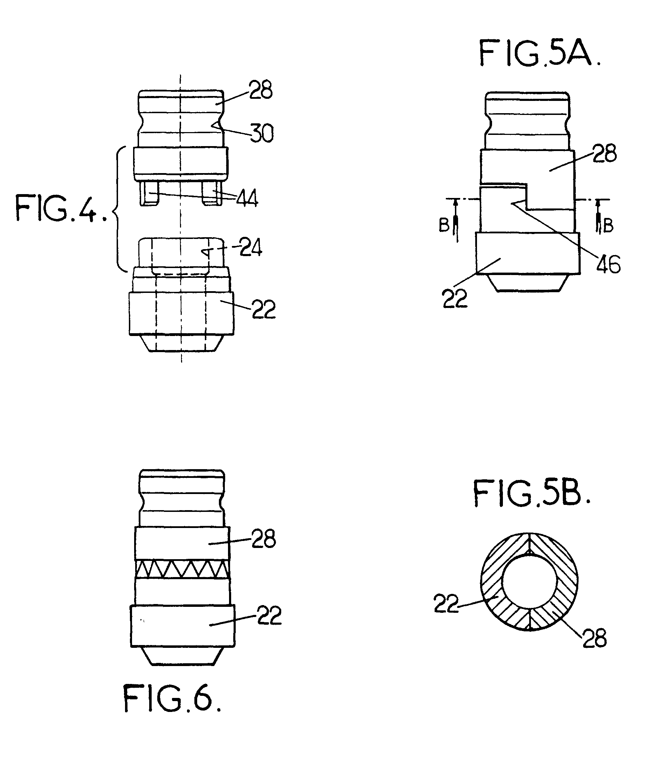

La cartouche 20 est munie d'un bouchon terminal inférieur 28 fixé de façon permanente à la cartouche 20, par exemple par roulage. Pour cela, le bouchon comporte une gorge circonférentielle 30 (figure 4) dans laquelle on refoule la paroi mince de la cartouche. Dans le bouchon 28 est prévu un trou taraudé axial 32 destiné à recevoir la partie terminale filetée de la tige de la vis 26.

La vis 26 est percée d'un passage axial calibré, dont le diamètre est choisi en fonction de l'effet de dash pot désiré lors de la chute des crayons. La tête 36 de la vis s'appuie contre un épaulement prévu à cet effet dans un évidement de l'embout inférieur 10. Elle se prolonge par une jupe mince 38 destinée à être déformée dans des alvéoles prévus à cet effet pour bloquer la vis en rotation. Une empreinte 42 peut être prévue dans la tête de la vis pour recevoir une clé de serrage et de desserrage.

Des moyens coopérants sont prévus sur les bouchons 22 et 28 pour interdire leur rotation relative. Dans le cas représenté sur les figures 2 à 4, ils comportent deux doigts dirigés axialement et diamétralement opposés, que l'on peut considérer comme un tenon 44 interrompu par un trou lisse destiné à livrer passage à la tige de la vis 26.

Les moyens complémentaires prévus sur le bouchon de tube guide 22 sont constitués par deux saillies délimitant une mortaise 46 (figure 2) interrompue par le trou central lisse 24 de passage de la tige de la vis 26.

Dans la variante de réalisation montrée en figures 5A et 5B, les bouchons 22 et 28 prennent appui l'un contre l'autre par un épaulement diamétral unique 46. Cet épaulement délimite, sur chaque bouchon, un prolongement ou saillie en forme de demi-lune.

Dans le cas de la figure 6, les moyens coopérants sont constitués par deux dentures s'engrenant l'une l'autre. La pente des dents doit être suffisamment élevée (dans la pratique supérieure à 45°) pour éviter que le couple exercé sur la vis n'entraîne initialement le bouchon de cartouche 28.

Le mode d'assemblage des composants qui viennent d'être décrits peut être le suivant.

On constitue tout d'abord d'une part un sous-ensemble de squelette, d'autre part des blocs constitués chacun d'une cartouche et d'un bouchon terminal inférieur.

Chaque bloc est par exemple réalisé en engageant la cartouche 20 sur le bouchon de cartouche 28 jusqu'à ce qu'il vienne en butée contre un épaulement prévu à cet effet, puis en sertissant la cartouche dans une gorge circonférentielle 30 du bouchon.

Le sous-ensemble du squelette peut être constitué, de façon classique, en soudant par points les grilles sur les tubes guides et éventuellement en plaçant un embout supérieur.

Chaque cartouche est ensuite insérée jusqu'à ce qu'elle vienne en appui contre le bouchon 22 du tube guide correspondant. Par rotation de la cartouche, on l'amène dans l'orientation convenable, par exemple pour engager le tenon de son bouchon 28 dans la mortaise correspondante (figures 2 à 4). A ce stade, on peut fixer provisoirement la cartouche au tube guide pour la maintenir en position crabotée, par exemple par des expansions locales 48 de la paroi mince de la cartouche dans la paroi mince du tube guide (figure 3). Cette solidarisation permet également des opérations ultérieures de réparation sur site, si elles deviennent nécessaires.

L'embout inférieur 10 est ensuite mis en place sur les tubes guides et les vis 26 sont vissées dans les bouchons de cartouche 28, généralement à l'aide d'une clé comportant des moyens de réglage du couple de serrage.

L'invention est susceptible de nombreuses autres variantes et en particulier la cartouche peut avoir des formes variables et une extrémité en biseau ou conforme à la demande de brevet EP-A-0 817 204.

## Revendications

1. Squelette d'assemblage combustible nucléaire ayant un embout supérieur et un embout inférieur (10) reliés par des tubes guides (16) destinés à recevoir des crayons de grappe de commande et contenant, à leur partie inférieure, une cartouche tubulaire (20), lesdits tubes étant munis chacun d'un bouchon inférieur (22) venant en appui contre l'embout inférieur (10) et percé d'un trou de passage d'une vis de fixation (26),
**caractérisé en ce que** la cartouche (20) comporte un bouchon inférieur (28) en appui contre le bouchon (22) du tube guide et **en ce que** les faces en regard des deux bouchons (22,28) présentent des saillies axiales coopérant entre elles pour provoquer un blocage en rotation l'un par rapport à l'autre des deux bouchons lorsque ladite vis (26) est vissée dans un trou taraudé (32) du bouchon de cartouche (28).

2. Squelette selon la revendication 1, **caractérisé en ce que** lesdites saillies constituent un crabotage.

3. Squelette selon la revendication 1, **caractérisé en ce que** lesdites saillies axiales comportent un tenon (44) sur l'un des bouchons (28) et une mortaise diamétrale (46) dans l'autre bouchon.

4. Squelette selon la revendication 1, **caractérisé en ce que** lesdites saillies constituent des dentures complémentaires.

5. Squelette selon la revendication 1, **caractérisé en ce que** lesdites saillies sont chacunes délimitées par un épaulement diamétral.

6. Squelette selon la revendication 1, **caractérisé en ce que** la vis de fixation (26) comporte une tête (36) en appui contre le fond d'un évidement dans l'embout inférieur et prolongée par une jupe (38) déformable dans des alvéoles (40) de l'évidement.

7. Squelette selon l'une quelconque des revendications précédentes, **caractérisé en ce que** les tubes guides portent des grilles (12,14) et **en ce que** la cartouche se prolonge jusqu'au-dessus des deux grilles basses.

8. Procédé de montage d'un squelette d'assemblage combustible nucléaire, suivant lequel :
- on constitue des blocs constitués chacun d'une cartouche (20) et d'un bouchon terminal (28) ayant un trou taraude (32), fixés l'un à l'autre.
- on constitue un sous-ensemble de squelette comprenant des tubes guides (16) munis chacun d'un bouchon inférieur (22) percé d'un trou axial lisse (24), assemblés par des grilles (12, 14) soudées sur les tubes,
- on introduit à frottement doux les blocs dans les tubes guides respectifs en les orientant pour provoquer l'engagement relatif de saillies en regard des bouchons (28, 22) de cartouche et de tube guide, et
- on fixe un embout inférieur (10) d'assemblage aux tubes guides par des vis (26) dont la tête s'appuye sur l'embout et dont la tige traverse le tube guide du bouchon inférieur de tube guide et se visse dans le trou taraudé du bouchon de cartouche.

9. Procédé selon la revendication 8, **caractérisé en ce que** la cartouche et le bouchon de cartouche sont fixés l'un à l'autre par sertissage dans une gorge circonférentielle du bouchon.

## Patentansprüche

1. Kernbrennstoff-Montagegerüst mit einem oberen Ansatzstück und einem unteren Ansatzstück (10), die über Führungsrohre (16) miteinander verbunden sind, welche Steuerbündel-Stäbe aufnehmen sollen und in ihrem unteren Bereich einen rohrförmigen Einsatz (20) enthalten, wobei die Rohre je mit einem unteren Stopfen (22) versehen sind, der gegen das untere Ansatzstück (10) anliegt und ein Durchgangsloch für eine Befestigungsschraube (26) aufweist, **dadurch gekennzeichnet, daß** der Einsatz (20) einen unteren Stopfen (28) aufweist, der gegen den Stopfen (22) des Führungsrohrs anliegt, und daß die einander gegenüberliegenden Flächen der beiden Stopfen (22, 28) axiale Vorsprünge aufweisen, die zusammenwirken, um eine Blockierung der beiden Stopfen in Drehrichtung zueinander zu bewirken, wenn die Schraube (26) in ein Gewindeloch (32) des Einsatz-Stopfens (28) eingeschraubt ist.

2. Gerüst nach Anspruch 1, **dadurch gekennzeichnet, daß** die Vorsprünge eine Klauenkupplung bilden.

3. Gerüst nach Anspruch 1, **dadurch gekennzeichnet, daß** die axialen Vorsprünge an einem der Stopfen (28) einen Zapfen (44) und in dem anderen Stopfen ein diametrales Zapfenloch (46) aufweisen.

4. Gerüst nach Anspruch 1, **dadurch gekennzeichnet, daß** die Vorsprünge komplementäre Zahnungen bilden.

5. Gerüst nach Anspruch 1, **dadurch gekennzeichnet, daß** die Vorsprünge je von einer diametralen Schulter begrenzt werden.

6. Gerüst nach Anspruch 1, **dadurch gekennzeichnet, daß** die Befestigungsschraube (26) einen Kopf (36) aufweist, der gegen den Boden einer Aussparung im unteren Ansatzstück anliegt und durch eine in Vertiefungen (40) der Aussparung verformbare Schürze (38) verlängert wird.

7. Gerüst nach einem der vorhergehenden Ansprüche, **dadurch gekennzeichnet, daß** die Führungsrohre Gitter (12, 14) tragen und daß der Einsatz sich bis über die beiden unteren Gitter hinaus verlängert.

8. Verfahren zum Zusammenbau eines Kernbrennstoff-Montagegerüsts, gemäß dem:
- Blöcke gebildet werden, die je aus einem Einsatz (20) und einem ein Gewindeloch (32) aufweisenden Endstopfen (28) bestehen, die aneinander befestigt sind,
- eine Gerüst-Untereinheit gebildet wird, die Führungsrohre (16) aufweist, welche je mit einem unteren Stopfen (22) versehen sind, der ein glattes axiales Loch (24) aufweist, und die durch auf die Rohre geschweißte Gitter (12, 14) zusammengesetzt werden,
- unter leichter Reibung die Blöcke in die jeweiligen Führungsrohre eingeführt werden, indem sie so ausgerichtet werden, daß das gegenseitige Ineinandergreifen der einander gegenüberliegenden Vorsprünge der Stopfen (28, 22) des Einsatzes und des Führungsrohrs bewirkt wird,
- ein unteres Montage-Ansatzstück (10) an den Führungsrohren durch Schrauben (26) befestigt wird, deren Kopf auf dem Ansatzstück aufliegt und deren Schaft das Führungsrohr des unteren Führungsrohr-Stopfens durchquert und sich in das Gewindeloch des Einsatz-Stopfens schraubt.

9. Verfahren nach Anspruch 8, **dadurch gekennzeichnet, daß** der Einsatz und der Einsatz-Stopfen durch Einquetschen in einer Umfangskehle des Stopfens aneinander befestigt werden.

## Claims

1. A nuclear fuel assembly skeleton having a top nozzle and a bottom nozzle (10) interconnected by guide tubes (16) designed to receive control cluster rods and each containing, at its bottom end, a tubular cartridge (20), each of said tubes being provided with a bottom plug (22) that bears against the bottom nozzle (10) and that is pierced by a hole for passing a fixing screw (26),
**characterized in that** the cartridge (20) includes a bottom plug (28) bearing against the guidetube plug (22) and **in that** the facing faces of the two plugs (22, 28) present axial projections that co-operate with one another to lock the two plugs against relative rotation once said screw (26) has been screwed into a tapped hole (32) in the cartridge plug (28).

2. A skeleton according to claim 1, **characterized in that** said projections constitute a jaw clutch.

3. A skeleton according to claim 1, **characterized in that** said axial projections comprise a tenon (44) on one of the plugs (28) and a diametral mortise (26) in the other plug.

4. A skeleton according to claim 1, **characterized in that** said projections constitute complementary sets of teeth.

5. A skeleton according to claim 1, **characterized in that** each of said projections is defined by a diametral shoulder.

6. A skeleton according to any preceding claim, **characterized in that** the fixing screw (26) includes a head (36) bearing against the bottom of a recess in the bottom nozzle and extended by a skirt (38) that is deformable into indentations (40) in the recess. extended by a skirt (38) that is deformable into indentations (40) in the recess.

7. A skeleton according to any preceding claim, **characterized in that** the guide tubes carry grids (12, 14), and **in that** the cartridge extends to higher than the two bottom grids.

8. A method of assembling a nuclear fuel assembly skeleton, comprising:
. building up blocks, each constituted by a cartridge (20) and an end plug (28) having a threaded hole (32), the cartridge and the plug being fixed to each other;
. building up a skeleton subassembly comprising guide tubes (16), each provided with a bottom plug (22) formed with a smooth axial hole (24), the tubes being assembled together by grids (12, 14) welded to the tubes;
. inserting the blocks as snug fits in respective guide tubes and orienting them so as to cause the facing projections of the cartridge and guidetube plugs (28, 22) to engage mutually; and
. securing a bottom nozzle (10) of the assembly to the guide tubes by screws (26) each having a head bearing the nozzle and a shank passing through the bottom plug of the guide tube and screwed into the tapped hole of the cartridge plug.

9. A method according to claim 8, **characterized in that** the cartridge and the cartridge plug are fixed to each other by crimping in a circumferential groove of the plug.
